(19) Europäisches Patentamt / European Patent Office / Office européen des brevets

(11) **EP 1 464 807 B1**

(12) **EUROPÄISCHE PATENTSCHRIFT**

(45) Veröffentlichungstag und Bekanntmachung des Hinweises auf die Patenterteilung:
**21.07.2010 Patentblatt 2010/29**

(51) Int Cl.:
*F02B 37/18* *(2006.01)*     *F02D 41/00* *(2006.01)*

(21) Anmeldenummer: **04003002.5**

(22) Anmeldetag: **11.02.2004**

(54) **Verfahren und Vorrichtung zur Ansteuerung eines Stellgliedes in einem Abgasturbolader**

Method and apparatus for controlling an actuator of an exhaust gas turbocharger

Procédé et dispositif pour le réglage d'un actionneur dans un turbocompressseur

(84) Benannte Vertragsstaaten:
**DE ES FR SE**

(30) Priorität: **02.04.2003 DE 10314985**

(43) Veröffentlichungstag der Anmeldung:
**06.10.2004 Patentblatt 2004/41**

(73) Patentinhaber: **ROBERT BOSCH GMBH**
**70442 Stuttgart (DE)**

(72) Erfinder:
• **Wegener, Sabine**
**71679 Asperg (DE)**
• **Wild, Ernst**
**71739 Oberriexingen (DE)**
• **Hild, Rainer**
**71696 Moeglingen (DE)**

(56) Entgegenhaltungen:
EP-A- 0 742 358     EP-A- 1 213 455
US-A- 4 449 367     US-A- 4 697 421
US-A- 4 709 553     US-A- 5 680 763
US-A- 6 012 289

## Beschreibung

Stand der Technik

Die Erfindung geht von einem Verfahren und von einer Vorrichtung zur Ansteuerung eines Stellgliedes nach der Gattung der unabhängigen Ansprüche aus.

Verfahren und Vorrichtungen zur Ansteuerung eines Stellgliedes sind bereits bekannt. So ist bereits zur Dosierung des Abgasmassenstroms bei einer Brennkraftmaschine, der über die Turbine eines Abgasturboladers fließen soll, ein Bypass um die Turbine bekannt. Dieser Bypass wird auch als Wastegate bezeichnet. Über eine Wastegateklappe lässt sich der Öffnungsquerschnitt des Wastegates verstellen. Bei einem Abgasturbolader mit Wastegateklappe stellt ein Taktventil, das mit zwei Steuerdruckanschlüssen verbunden ist, an seinem Ausgang einen Steuerdruck zur Verfügung. Bei einem herkömmlichen Standardsystem ist ein erster Eingangsanschluss des Taktventils an den Ladedruck angeschlossen. Ein zweiter Eingangsanschluss des Taktventils ist an den Umgebungsdruck angeschlossen. Der Ausgangsdruck des Taktventils ist über einen Schlauch an eine Druckdose des Wastegatestellers angeschlossen. Die Druckdose besteht im wesentlichen aus einer Kammer, die mit Druck beaufschlagt werden kann. Zu einer Seite ist die Druckdose mit einer Membran abgeschlossen. Außerhalb der Druckdose herrscht Umgebungsdruck. Die Membran drückt gegen eine Feder. Abhängig von der Position der Membran, die mit einer Wastegatestange verbunden ist, bewegt sich die Wastegatestange, wodurch auch die Wastegateklappe mehr oder weniger geöffnet wird. Mit dem Taktventil wird zwischen den beiden Steuerdrücken in einem bestimmten Tastverhältnis hin und her geschaltet.

Damit lässt sich ein beliebiger Steuerdruck zwischen dem Umgebungsdruck und dem Ladedruck einstellen.

Ein Ladedruckregler vergleicht den Istwert des Ladedruckes mit einem Sollwert und verändert das Tastverhältnis so lange, bis Soll- und Istdruck übereinstimmen. Dabei stellt sich ein bestimmter Steuerdruck und damit eine bestimmte Position der Wastegateklappe ein.

Aus der US 5,680,763 ist ein System zur Regelung der Aufladung einer Brennkraftmaschine bekannt. Dazu kann beispielsweise der mit einem Ladedrucksensor erfasste Ladedruck-Istwert auf einen von einem Kennfeld ausgegebenen Ladedruck-Sollwert geregelt werden. Abhängig von der Abweichung zwischen dem Ladedruck-Istwert und dem Ladedruck-Sollwert wird ein Bypassventil angesteuert, das in einer Bypassleitung angeordnet ist, die um die Turbine eines Abgasturboladers herumführt. Ein Verknüpfungspunkt 128 ermittelt durch Differenzbildung aus dem Ladedruck-Sollwert und dem Ladedruck-Istwert eine Regelabweichung e und stellt ein entsprechendes Signal am Ausgang bereit. Der Ausgang des Verknüpfungspunktes 128 ist mit dem Eingang eines Proportionalreglers 130, dem Eingang eines Differenzialreglers 132 und dem Eingang eines Integralreglers 134 verbunden. Die Ausgänge der drei genannten Regler sind mit je einem Eingang eines Verknüpfungspunktes 136 verbunden. Im Verknüpfungspunkt 136 werden das Ausgangssignal PTV des Proportionalreglers 130, das Ausgangssignal DTV des Differenzialreglers 132 und das Ausgangssignal ITV des Integralreglers 134 überlagert. Das durch die Überlagerung erzeugte Signal TV wird am Ausgang des Verknüpfungspunktes 136 bereitgestellt. Der Ausgang des Verknüpfungspunktes 136 ist mit einer Ansteuerstufe 138 verbunden. Die Ansteuerstufe 138 erzeugt aus dem Signal TV ein Signal zur Ansteuerung des Bypass-Ventils 120 und gibt dieses Signal an das Bypassventil 120 weiter. Das von der Ansteuerstufe 138 erzeugte Signal kann beispielsweise ein pulsweitenmoduliertes Signal sein.

Aus der EP 0 742 358 A1 ist ein elektronisches Drosselklappensteuersystem bekannt. Eine Regelung dient zur Einstellung der Position einer Drosselklappe im Ansaugrohr eines Motors. Sensoren erzeugen elektrische Signalwerte, die einen Druck und eine Temperatur in einem Lufteinlass- sowie einem Druck im Ansaugrohr anzeigen. Ein programmierter Mikrocontroller erzeugt abhängig von diesen Signalwerten und abhängig von einem Wert, der eine gewünschte Massenflussrate, einen weiteren Wert, der eine gewünschte Position der Drosselklappe angibt. Ein Vergleicher 60 wird verwendet, um ein Fehlersignal zu erzeugen, das eine Differenz einer gemessenen aktuellen Massenflussrate und der gewünschten Massenflussrate angibt. Der Regler erzeugt ein Ausgangssignal abhängig von der Abweichung der gemessenen aktuellen Massenflussrate und der gewünschten Massenflussrate. Das Ausgangssignal des Reglers wird mit der Kennfeld ermittelten gewünschten Massenflussrate überlagert und das überlagerte Signal wird verwendet um die Position der Drosselklappe anzusteuern.

Vorteile der Erfindung

Das erfindungsgemäße Verfahren und die erfindungsgemäße Vorrichtung mit den Merkmalen der unabhängigen Ansprüche haben demgegenüber den Vorteil, dass von der Regelung zur Umsetzung der vorgegebenen Regelgröße eine Sollposition für einen Steller des Stellgliedes vorgegeben wird und dass in Abhängigkeit der Sollposition des Stellers ein Ansteuersignal gebildet wird, mit dem das Stellglied zur Einstellung der Sollposition angesteuert wird, und dass zur Bildung des Ansteuersignals ein Verhältnis zwischen zwei Steuergrößen vorgegeben wird und dass das Verhältnis in Abhängigkeit der Sollposition des Stellers vorgegeben wird.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn zur Bildung des Ansteuersignals mit einem Tastverhältnis zwischen zwei Steuergrößen umgeschaltet wird und wenn das Tastverhältnis in Abhängigkeit der Sollposition des Stellers gebildet wird. Auf diese Weise lässt sich das Ansteuersignal besonders einfach und wenig aufwändig realisieren.

Vorteilhaft ist auch, wenn aus der vorgegebenen Sollposition über einen physikalischen Zusammenhang eine physikalische Größe zur Umsetzung der Sollposition am Stellglied bestimmt wird. Auf diese Weise lässt sich aus der vorgegebenen Sollposition besonders einfach mit Hilfe der physikalische Größe ein geeignetes Ansteuersignal bilden.

Vorteilhaft ist weiterhin, wenn das Tastverhältnis aus der physikalischen Größe bezogen auf eine Differenz zwischen den beiden Steuergrößen abgeleitet wird. Auf diese Weise kann das Tastverhältnis zur Umsetzung der Sollposition besonders einfach und wenig aufwändig gebildet werden.

Ein weiterer Vorteil ergibt sich, wenn als Stellglied eine Wastegateklappe eines Abgasturboladers gewählt wird, bei der der Steller als Ventil ausgebildet ist und die Sollposition durch einen Sollventilhub gebildet wird. Auf diese Weise lässt sich das Einschwingverhalten einer Ladedruckregelung zur Einstellung eines vorgegebenen Sollladedruckes verbessern. Unangenehmes Überschwingen der Ladedruckregelung sowie ein zu langsames Einschwingen der Ladedruckregelung wird auf diese Weise vermieden. Dies erhöht den Fahrkomfort im Falle der Anwendung des Abgasturboladers in einem Fahrzeug.

Ein weiterer Vorteil ergibt sich, wenn als eine erste Steuergröße ein Ladedruck und als eine zweite Steuergröße ein Umgebungsdruck gewählt werden. Auf diese Weise lässt sich das Tastverhältnis zur Ansteuerung der Wastegateklappe zur Umschaltung zwischen dem Ladedruck und dem Umgebungsdruck verwenden, sodass als Ansteuersignal für die Wastegateklappe ein Druck zwischen dem Ladedruck und den Umgebungsdruck gewählt werden kann. Dies ist auch deshalb von Vorteil, weil der Ladedruck und der Umgebungsdruck i. d. R. sowieso zur Verfügung stehen, sodass keine zusätzliche Sensorik erforderlich ist.

Ein weiterer Vorteil ergibt sich, wenn als physikalische Größe ein Differenzdruck gewählt wird, der eingestellt werden muss, um den Sollventilhub umzusetzen. Auf diese Weise lässt sich die Wastegateklappe besonders einfach und wenig aufwändig ansteuern.

Vorteilhaft ist auch, wenn als Stellglied ein Ladedrucksteller gewählt wird, mit dem eine Geometrie einer Turbine eines Abgasturboladers variabel verstellt wird, und dass die Sollposition durch einen Sollwert für die Turbinengeometrie gebildet wird. Auf diese Weise lässt sich das Einschwingverhalten einer Ladedruckregelung zur Einstellung eines vorgegebenen Sollladedruckes auch dann verbessern, wenn der Ladedruck durch variable Verstellung der Geometrie der Turbine des Abgasturboladers umgesetzt wird.

Vorteilhaft ist weiterhin, wenn zur Bildung des Ansteuersignals ein Verhältnis, insbesondere fest, zwischen zwei Steuergrößen vorgegeben wird und wenn das Verhältnis in Abhängigkeit der Sollposition des Stellers vorgegeben wird. Auf diese Weise lässt sich das Ansteuersignal besonders präzise und bei fest vorgegebenen Verhältnis zwischen den beiden Steuergrößen auch weniger verschleißanfällig realisieren.

Zeichnung

Ein Ausführungsbeispiel der Erfindung ist in der Zeichnung dargestellt und in der nachfolgenden Beschreibung näher erläutert. Es zeigen Figur 1 ein Blockschaltbild einer Brennkraftmaschine, Figur 2 eine schematische Ansicht eines Wastegates im Abgasstrang der Brennkraftmaschine, Figur 3 ein erstes Funktionsdiagramm zur Erläuterung des erfindungsgemäßen Verfahrens und der erfindungsgemäßen Vorrichtung und Fig. 4 ein zweites Funktionsdiagramm zur Erläuterung des erfindungsgemäßen Verfahrens und der erfindungsgemäßen Vorrichtung und Figur 4 ein zweites Funktionsdiagramm zur Erläuterung des erfindungsgemäßen Verfahrens und der erfindungsgemäßen Vorrichtung.

Beschreibung des Ausführungsbeispiels

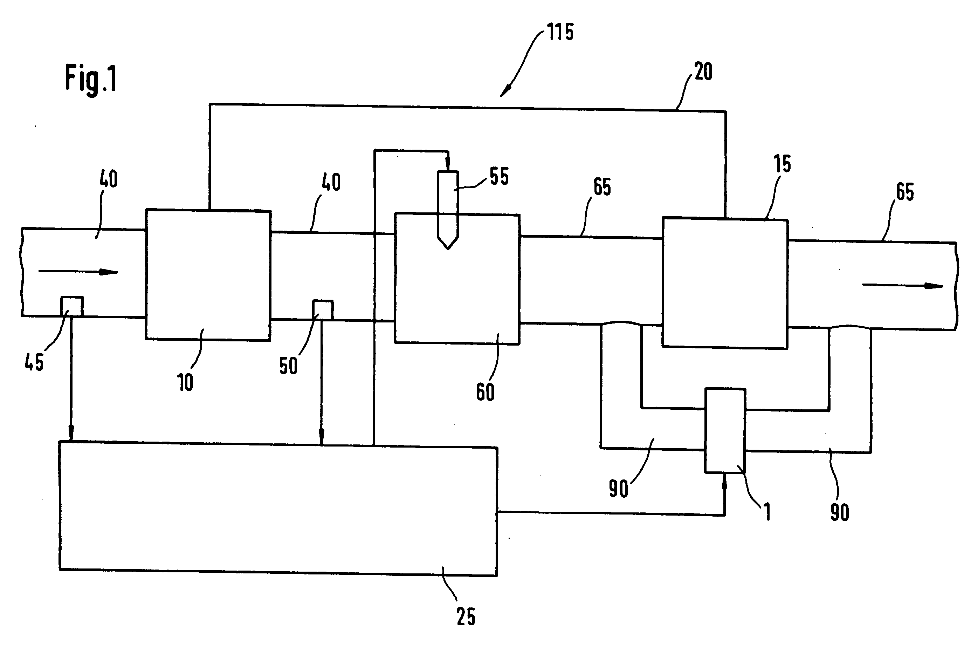

In Figur 1 kennzeichnet 115 eine Brennkraftmaschine, beispielsweise eines Kraftfahrzeugs. Die Brennkraftmaschine 115 umfasst einen Verbrennungsmotor 60. Der Verbrennungsmotor 60 kann bspw. als Ottomotor oder als Dieselmotor ausgebildet sein. Im Folgenden zur beispielhaft angenommen werden, dass der Verbrennungsmotor 60 als Dieselmotor ausgebildet ist. Dem Dieselmotor 60 ist über eine Luftzufuhr 40 Frischluft zugeführt. Die Strömungsrichtung der Frischluft in der Luftzufuhr 40 ist in Figur 1 durch einen Pfeil gekennzeichnet. In der Luftzufuhr 40 ist ein Verdichter 10 eines Abgasturboladers verbaut. Der Verdichter 10 verdichtet die dem Dieselmotor 60 zugeführte Frischluft. In Strömungsrichtung der Frischluft dem Verdichter 10 vorab angeordnet ist ein Umgebungsdrucksensor 45, der den Umgebungsdruck misst und das Messergebnis an eine erfindungsgemäße Vorrichtung 25 weiterleitet. Die erfindungsgemäße Vorrichtung 25 ist in diesem Beispiel als Motorsteuerung ausgebildet. Dem Verdichter 10 ist in Strömungsrichtung der Frischluft nachfolgend in der Luftzufuhr 40 ein Ladedrucksensor 50 angeordnet, der den Ladedruck in dem Abschnitt der Luftzufuhr 40 zwischen dem Verdichter 10 und dem Dieselmotor 60 misst und das Messergebnis ebenfalls an die Motorsteuerung 25 weiterleitet. Die vom Verdichter 10 verdichtete Frischluft ist einem Brennraum des Dieselmotors 60 über ein in Figur 1 nicht dargestelltes Einlassventil zugeführt. Dem Brennraum des Dieselmotors 60 ist über ein Einspritzventil 55 Kraftstoff zugeführt. Das Einspritzventil 55 wird von der Motorsteuerung 25 zur Einstellung eines vorgegebenen Luft-/Kraftstoffgemischverhältnisses in dem Fachmann bekannter Weise angesteuert. Das bei der Verbrennung des Luft-/Kraftstoffgemisches im Brennraum entstehende Abgas wird über ein in Figur 1 nicht dargestelltes Auslassventil aus dem Brennraum des Dieselmotors 60 in einen Abgasstrang 65 ausgestoßen. Die Strömungsrichtung des Abgases im Abgasstrang 65 ist in Figur 1 ebenfalls durch einen Pfeil gekennzeichnet. Im Abgasstrang 65 ist eine Turbine 15 des Abgasturboladers verbaut. Die Turbine 15 wird vom Abgasmassestrom angetriebenen. Sie ist über eine Welle 20 mit dem Verdichter 10 verbunden. Auf diese Weise treibt die Turbine 15 den Verdichter 10 zur Verdichtung der Frischluft in der Luftzufuhr 40 an. Die Turbine 15 wird von einer Bypass 90, dem so genannten Wastegate, umgangen. Im Wastegate 90 ist ein Stellglied 1 angeordnet. Das Stellglied 1 ist in diesem Beispiel als Wastegateklappe ausgebildet. Der Öffnungsquerschnitt des Wastegates 90 kann durch Ansteuerung der Wastegateklappe 1 seitens der Motorsteuerung 25 variiert werden. Auf diese Weise lässt sich die Verdichterleistung des Verdichters 10 und damit der Ladedruck variieren.

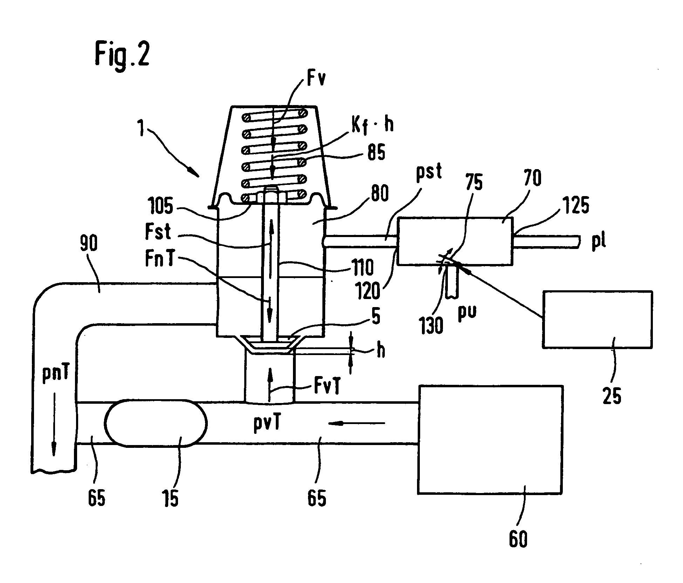

In Figur 2 ist das Wastegate 90 mit der Wastegateklappe 1 schematisch dargestellt. Dabei kennzeichnen gleiche Bezugszeichen gleiche Elemente wie in Figur 1. Die Wastegateklappe 1 umfasst eine Druckdose 80, der über einen Ausgang 120 eines Taktventils 70 ein Steuerdruck pst zugeführt wird. Außerhalb der Druckdose 80 herrscht der Umgebungsdruck pu. Über einen ersten Eingang 125 ist dem Taktventil 70 der Ladedruck pl zugeführt, der beispielsweise von der Luftzufuhr 40 zwischen dem Verdichter 10 und dem Dieselmotor 60 abgenommen werden kann. Einem zweiten Eingang 130 des Taktventils 70 ist der Umgebungsdruck pu zugeführt. Dazu kann der zweite Eingang 130 auch einfach zur Umgebung hin geöffnet sein. Der zweite Eingang 130 ist über einen Schalter 75 verschließbar bzw. öffenbar. Der Schalter 75 wird von der Motorsteuerung 25 angesteuert. Dabei kann von der Motorsteuerung 25 ein Tastverhältnis τ vorgegeben sein, mit dem der Schalter 75 öffnen und schließen soll.

In der Druckdose 80 herrscht somit der Steuerdruck pst. Der Steuerdruck pst führt zu einer Steuerkraft Fst. Auf der dem Wastegate 90 abgewandten Seite der Druckdose 80 ist diese durch eine Membran 105 begrenzt. Der Membran 105 ist gegen eine Feder 85 in Richtung vom Wastegate 90 weg bewegbar. Dabei ist die Feder 85 mit einer Vorspannkraft Fv gegen die Membran 105 vorgespannt. Die Membran 105 ist fest mit einer Wastegatestange 110 verbunden. An ihrem dem Wastegate 90 zugewandten Ende umfasst die Wastegatestange 110 einen Steller 5, der in diesem Beispiel als Tellerventil ausgebildet ist. Zum Wastegate 90 hin ist die Druckdose 80 starr und fest geschlossen. Abhängig von der Position der Membran 105 bewegt sich die Wastegatestange 110, wodurch auch das Tellerventil 5 mehr oder weniger geöffnet wird.

Wenn als Steuerdruck pst der Umgebungsdruck pu gewählt wird, dann ist das Tellerventil 5 geschlossen, sodass das Abgas vollständig über die Turbine 15 abgeführt wird und somit die maximale Verdichterleistung eingestellt wird. Um das Tellerventil 5 um einen Hub h zu öffnen, ist ein Steuerdruck pst größer dem Umgebungsdruck pu erforderlich. Mit diesem Steuerdruck pst muss dann betragsmäßig neben der Vorspannkraft Fv die Federkraft Kf*h aufgewendet werden, um den Hub h zu realisieren. Kf ist dabei die Federkonstante. Im Abgasstrang 65 in Strömungsrichtung des Abgases vor der Turbine 15 herrscht ein erster Abgasgegendruck pvT. Im Abgasstrang 65 in Strömungsrichtung des Abgases hinter der Turbine 15 herrscht ein zweiter Abgasgegendruck pnT. Der erste Abgasgegendruck pvT führt zu einer ersten Abgasgegenkraft FvT, die in Richtung zur Öffnung des Tellerventils 5 wirkt. Der zweite Abgasgegendruck pnT führt zu einer zweiten Abgasgegenkraft FnT, die in Richtung zum Schließen des Tellerventils 5 wirkt. Der erste Abgasgegendruck pvT ist in aller Regel größer als der zweite Abgasgegendruck pnT, sodass die resultierende Abgasgegenkraft Fr = FvT + FnT in Richtung zur Öffnung des Tellerventils 5 wirkt. Die resultierende Abgasgegenkraft Fr unterstützt somit den Steuerdruck pst und damit die Steuerkraft Fst zur Öffnung des Tellerventils 5. Ist jedoch der Steuerdruck pst gleich dem Umgebungsdruck pu, dann wird das Tellerventil 5 nur geöffnet, wenn die Vorspannkraft Fv betragsmäßig kleiner als die resultierende Abgasgegenkraft Fr ist. Bei der Bestimmung der resultierenden Abgasgegenkraft Fr mit Fr = FvT + FnT wurde davon ausgegangen, dass der resultierende Abgasgegendruck pr = pvT + pnT ist. Dies ist jedoch lediglich eine Näherung. Ganz allgemein lässt sich die resultierende Abgasgegenkraft Fr als Funktion der beiden gegen das Tellerventil 5 drückenden Abgasgegendrücke pvT, pnT formulieren, also Fr = f(pvT,pnT). Der erste Abgasgegendruck pvT und der zweite Abgasgegendruck pnT können in dem Fachmann bekannter Weise in Abhängigkeit des Abgasmassenstroms und dem vom Auspuff her ermittelten Druckabfall an einem gegebenenfalls vorhandenen Katalysator modelliert werden, wobei für die Ermittlung des ersten Abgasgegendrucks pvT zusätzlich der Druckabfall an der Turbine 15 und an der Wastegateklappe 1 berücksichtigt werden muss. Der Druckabfall an der Turbine 15 und an der Wastegateklappe 1 hängt dabei vom Turbinenquerschnitt und vom Wastegatequerschnitt, also dem Hub h des Tellerventils 5 ab. Der erste Abgasgegendruck pvT und der zweite Abgasgegendruck pnT können aber auch mittels jeweils eines Drucksensors gemessen werden, wobei die Messwerte an der Motorsteuerung 25 weitergeleitet werden können. Dies ist in den Figuren nicht dargestellt.

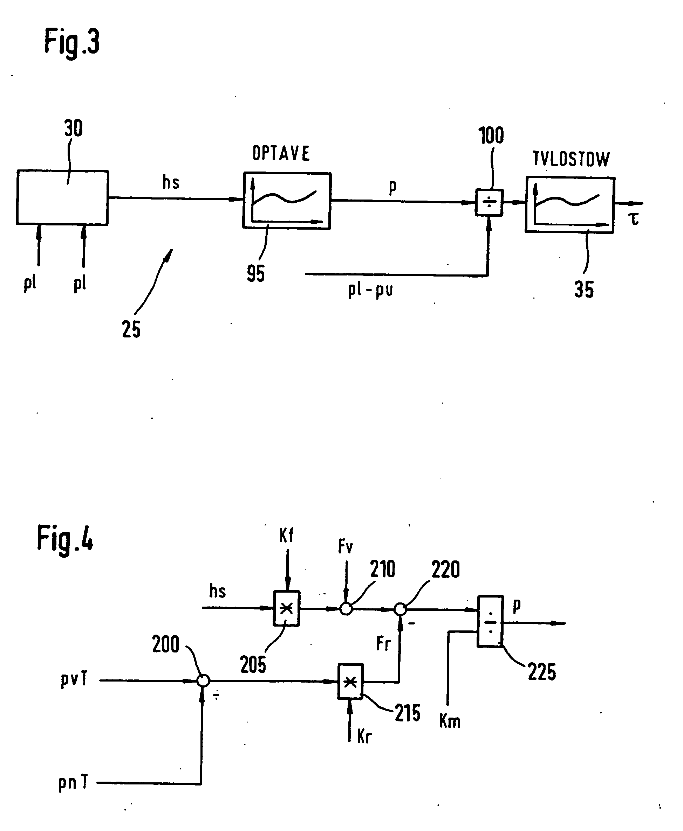

Mittels dem Tellerventil 5 lässt sich somit der Öffnungsquerschnitt des Wastegates 90 variieren. Je nach dem von der Motorsteuerung 25 vorgegebenen Tastverhältnis τ lässt sich jeder beliebige Steuerdruck pst zwischen dem Umgebungsdruck pu und dem Ladedruck pl einstellen. Die Motorsteuerung 25 umfasst einen Ladedruckregler 30 gemäß Figur 3, der einen Ladedruckistwert plist mit einem vorgegebenen Ladedrucksollwert plsoll vergleicht. In Abhängigkeit des Vergleichsergebnisses gibt der Ladedruckregler 30 die Stellerposition, hier den Hub h, in Form eines Sollhubes hs vor. Wenn sich der erste Abgasgegendruck pvT oder der zweite Abgasgegendruck pnT ändert oder der Ladedruck pl sich unterschiedlich schnell aufbaut, dann ändert sich der Zusammenhang zwischen der Stellerposition, in diesem Beispiel dem Hub h, und dem Tastverhältnis. Dies muss der Ladedruckregler 30 ausregeln. Erfindungsgemäß liefert der Ladedruckregler 30 statt eines Sollwertes für das Tastverhältnis τ den Sollhub hs des Tellerventils 5. Auf Basis dieses Sollhubes hs berechnet dann eine Vorsteuerfunktion das dazugehörige Tastverhältnis τ. Die Vorsteuerfunktion verwendet dabei Größen, die den Zusammenhang zwischen dem Hub h und dem Tastverhältnis τ beschreiben und die in der Motorsteuerung 25 vorliegen. Dies entlastet den Ladedruckregler 30. Das Einschwingverhalten der Ladedruckregelung wird somit verbessert. Der Fahrkomfort wird besser. Unangenehmes Überschwingen der Ladedruckregelung wird somit verhindert. Zu langsames Einschwingen der Ladedruckregelung wird somit vermieden.

Den physikalischen Zusammenhang zwischen den Tastverhältnis τ und dem Hub h erhält man, wenn man eine Gleichung für das Kräftegleichgewicht aufstellt. Das Kräftegleichgewicht ist im wesentlichen gegeben durch die Vorspannkraft Fv der Feder 85, der Federkraft Kf*h, die abhängig von der Federkonstante Kf proportional zum Verstellweg der Feder 85, d. h. dem Hub h, ist, der Steuerkraft Fst, die proportional zum Steuerdruck pst ist, der an der Membran 105 der Druckdose 80 anliegt, und der resultierenden Abgasgegenkraft Fr, die auf Grund des Druckgefälles am Tellerventil 5 wie auch an der Turbine 15 anliegt. Der Steuerdruck pst an der Membran 105 wirkt mit den Tastverhältnis τ eingestellt. Bei τ = 100 Prozent ist der Steuerdruck pst gleich dem Umgebungsdruck pu. Bei τ = 0 ist der Steuerdruck pst gleich dem Ladedruck pl.

Das Kräftegleichgewicht ergibt sich somit zu

$$Fv + Kf * h \approx Km * pdiff + Fr \qquad (1)$$

Dabei ist Km eine Proportionalitätskonstante abhängig von der Fläche der Membran 105. Der Differenzdruck pdiff ist der Steuerdruck pst abzüglich dem Umgebungsdruck pu außerhalb der Druckdose 80. Somit ist Km*pdiff die von der Steuerkraft Fst herrührende Kraft, die auch die Membran 105 wirkt. Die Steuerkraft Fst selbst ergibt sich dabei zu Km*pst.

Der Differenzdruck pdiff lässt sich außerdem wie folgt schreiben:

$$pdiff \approx (pl - pu) * (1 - \tau) \qquad (2)$$

Setzt man Gleichung (2) in Gleichung (1) ein und löst nach τ auf, so erhält man für einen vorgegebenen Sollhub hs:

$$\tau \approx \left[ \frac{Kf * hs + Fv - Fr}{(pl - pu) * Km} \right] - 1 \qquad (3)$$

Der Differenzdruck pdiff, der einen vorgegebenen Sollhub hs am Tellerventil 5 eingestellt werden muss, berechnet sich aus Gleichung (1) wie folgt:

$$pdiff \approx \frac{Kf * hs + Fv - Fr}{Km} \qquad (4)$$

Der Differenzdruck pdiff wird bei gegebenem Ladedruck pl und gegebenem Umgebungsdruck pu mit Hilfe von Gleichung (2) gemäß den Tastverhältnis

$$\tau \approx 1 - \frac{pdiff}{pl - pu}$$

(5)

eingestellt.

Die Federkonstante Kf, die Vorspannkraft Fv und die Proportionalitätskonstante Km sowie der Ladedruck pl und der Umgebungsdruck pu sind in der Motorsteuerung 25 bekannt. Dabei sind die ersten drei genannten Größen als applizierbare Größen fest vorgegeben, während die letztgenannten beiden Größen pl, pu durch die Drucksensoren 45, 50 gemessen werden.

In Figur 3 ist ein Funktionsdiagramm dargestellt, das in der Motorsteuerung 25 softwareund/oder hardwaremäßig implementiert sein kann. Der vom Ladedruckregler 30 in Abhängigkeit des Vergleichs des Ladedrucksollwertes plsoll mit dem Ladedruckistwert plist vorgegebene Sollhub hs wird einem ersten Kennfeld 95 zugeführt, das in Figur 3 auch mit DPTAVE gekennzeichnet ist. Das erste Kennfeld 95 setzt näherungsweise die Gleichung (4) um und liefert den Differenzdruck pdiff. Der Differenzdruck pdiff wird einem ersten Divisionsglied 100 zugeführt und dort durch die Differenz pl-pu dividiert. Der Quotient wird einem zweiten Kennfeld 35 zugeführt. Das zweite Kennfeld 35 subtrahiert den zugeführten Quotienten von 1,so dass das erste Divisionsglied 100 und das zweite Kennfeld 35 zusammen die Gleichung (5) umsetzen. Das zweite Kennfeld 35 ist in Figur 3 auch mit TVLDSTDW gekennzeichnet. Es liefert als Ausgangsgröße das Tastverhältnis τ das als Ansteuergröße zur Umsetzung des vorgegebenen Sollhubes hs dem Taktventil 70 und dort dem Schalter 75 als Steuersignal zugeführt wird.

Das erste Kennfeld 95 und das zweite Kennfeld 35 können jeweils als Kennlinie ausgebildet sein. Das zweite Kennfeld 35 kann außerdem eine Schaltcharakteristik des Taktventils 70 bzw. des Schalters 75 berücksichtigen.

Die Umsetzung von Gleichung (4) mittels dem ersten Kennfeld 95 ist ausreichend, wenn die Vorspannkraft Fv hinreichend klein ist. Alternativ kann die Gleichung (4) korrekt umgesetzt werden gemäß dem Funktionsdiagramm nach Figur 4. Bei dem Funktionsdiagramm nach Figur 4 werden neben dem Sollhub hs auch noch die beiden Abgasgegendrücke pvT, pnT berücksichtigt. Die Ermittlung des Differenzdrucks pdiff wird dann gemäß dem Funktionsdiagramm nach Figur 4 durchgeführt. Dabei wird der Sollhub hs einem ersten Multiplikationsglied 205 zugeführt und dort mit der Federkonstante Kf multipliziert. Das gebildete Produkt wird einem ersten Additionsglied 210 zugeführt und dort mit der Vorspannkraft Fv addiert. Von der gebildeten Summe wird in einem ersten Subtraktionsglied 220 die resultierende Abgasgegenkraft Fr abgezogen. Die so gebildete Differenz wird einem zweiten Divisionsglied 225 zugeführt und dort durch die Proportionalitätskonstante Km dividiert. Der sich bildende Quotient ist dann der Differenzdruck pdiff. Die resultierende Abgasgegenkraft Fr wird wie folgt gebildet: der erste Abgasgegendruck pvT wird einem zweiten Subtraktionsglied 200 zugeführt. Vom ersten Abgasgegendruck pvT wird dabei im zweiten Subtraktionsglied 200 der zweite Abgasgegendruck pnT abgezogen. Die sich bildende Differenz wird einem zweiten Multiplikationsglied 215 zugeführt und dort mit einer applizierbaren effektiven Fläche Kr multipliziert, auf die die beiden Abgasgegendrücke pvT, pnT wirken. Die applizierbare effektive Fläche Kr ist dabei ebenfalls in der Motorsteuerung 25 bekannt. Das Produkt am Ausgang des zweiten Multiplikationsgliedes 215 ist die resultierende Abgasgegenkraft Fr.

Für die Berechnung des Tastverhältnisses τ können auch andere Eingangssteuerdrücke des Taktventils 70 als der Ladedruck pl und der Umgebungsdruck pu gewählt werden, sofern diese Eingangssteuerdrücke in der Motorsteuerung 25 bekannt sind. Diese Eingangssteuerdrücke ersetzen dann den Ladedruck pl und den Umgebungsdruck pu in den obigen Gleichungen. Entscheidend ist letztlich der Differenzdruck pdiff, der letztlich an der Membran 105 anliegt sowie diejenige Druckdifferenz, die maximal zur Verfügung steht, um eine gewünschte Druckdifferenz an der Membran 105 einzustellen. Für den Fall, dass bspw. an Stelle des Ladedruckes pl als Eingangssteuerdruck ein Unterdruck kleiner dem Umgebungsdruck pu, wobei der Unterdruck in einem in den Figuren nicht dargestellten separaten Vakuumreservoir zur Verfügung steht, verwendet wird, wird der Ladedruck pl in den obigen Gleichungen durch diesen Unterdruck ersetzt. Das Kräftegleichgewicht gemäß Gleichung (1) sowie die übrigen obengenannten Gleichungen sind auch für diesen Fall gültig. Bei negativen Druckdifferenzen pdiff kehrt sich auch das Vorzeichen des an der Membran 105 liegenden Druckes ins Negative um, was einem Ziehen an der Feder 85 entspricht.

Alternativ kann statt des Wastegates 90 mit der Wastegateklappe 1 als Stellglied auch ein Ladedrucksteller gewählt werden, mit dem eine Geometrie der Turbine 15 des Abgasturboladers zur Variation des Ladedruckes variabel verstellt werden kann. In diesem Fall wird von der Ladedruckregelung eine Sollposition in Form eines Sollwertes für die Turbinengeometrie in Abhängigkeit der Differenz zwischen dem Ladedruckistwert plist und dem Ladedrucksollwert plsoll vorgegeben. In Abhängigkeit des Sollwertes für die Turbinengeometrie wird dann ein Ansteuersignal gebildet, mit dem die Turbinengeometrie zur Einstellung des Sollwertes für die Turbinengeometrie angesteuert wird. Dieses Ansteuersignal kann dabei ebenfalls ein Tastverhältnis zum Umschalten zwischen zwei verschiedenen Druckwerten sein, mit denen die Geometrie der Turbinenblätter in den Fachmann bekannter Weise beeinflusst werden kann.

Ganz allgemein lässt sich das erfindungsgemäße Verfahren und die erfindungsgemäße Vorrichtung zur Ansteuerung eines beliebigen Stellgliedes verwenden, bei dem eines Position für einen Steller des Stellgliedes vorgegeben wird und in Abhängigkeit der Sollposition des Stellers ein Ansteuersignal gebildet wird, mit dem das Stellglied zur Einstellung der Sollposition angesteuert wird. Dabei kann zur Bildung des Ansteuersignals mit einem Tastverhältnis zwischen zwei Steuergrößen umgeschaltet werden und das Tastverhältnis in Abhängigkeit der Sollposition des Stellers gebildet werden. Alternativ kann zur Bildung des Ansteuersignals ein insbesondere festes Verhältnis zwischen zwei Steuergrößen vorgegeben werden und das Verhältnis in Abhängigkeit der Sollposition des Stellers vorgegeben werden. Aus der vorgegebenen Sollposition kann über einen physikalischen Zusammenhang eine physikalische Größe zur Umsetzung der Sollposition am Stellglied bestimmt werden. Das Ansteuersignal kann dabei in Abhängigkeit der physikalischen Größe gebildet werden. Im Falle der Verwendung des Tastverhältnisses zur Bildung des Ansteuersignals kann das Tastverhältnis aus der physikalischen Größe bezogen auf eine Differenz zwischen den beiden Steuergrößen abgeleitet werden. Im oben beschriebenen Beispiel wurde als Stellglied die Wastegateklappe 1 des Abgasturboladers 10, 15,20 gewählt. Dabei ist der Steller das Tellerventil 5 und die Sollposition des Tellerventils 5 wird durch den Sollventilhub oder Sollhub hs gebildet. Dabei wird als eine erste Steuergröße der Ladedruck pl und als eine zweite Steuergröße der Umgebungsdruck pu gewählt. Mit dem Tastverhältnis τ wird dann zwischen dem Ladedruck pl als der ersten Steuergröße und dem Umgebungsdruck pu als der zweiten Steuergröße im Taktventil 70 mittels dem Schalter 75 umgeschaltet, sodass sich als Ansteuersignal der Steuerdruck pst bzw. die Steuerkraft Fst ergibt. Als physikalische Größe wird im obigen Beispiel der Differenzdruck pdiff gewählt, der eingestellt werden muss, um den Sollventilhub hs umzusetzen. Der Differenzdruck pdiff wird dabei wie beschrieben mittels des ersten Kennfeldes 95 bzw. Gleichung (4) aus den Sollventilhub hs ermittelt. Das erste Kennfeld 95 bzw. die Gleichung (4) legt dabei als physikalischen Zusammenhang das beschriebene Kräftegleichgewicht zu Grunde. In Abhängigkeit des Differenzdruckes pdiffwird dann zur Bildung des Ansteuersignals gemäß dem obigen Beispiel gemäß Gleichung (5) mittels des Divisionsgliedes 100 und des zweiten Kennfeldes 35 das Tastverhältnis τ ermittelt. Somit wird das Tastverhältnis τ in Abhängigkeit des Sollventilhubs hs des Tellerventils 5 gebildet.

In einer alternativen Ausführungsform könnte als Stellglied 1 auch eine Drosselklappe in der Luftzuführung 40 gewählt werden, insbesondere dann, wenn der Verbrennungsmotor 60 als Ottomotor ausgebildet sein sollte. Die Ansteuerung der Drosselklappe könnte dann in entsprechender Weise wie bei der Wastegateklappe druckbasiert durch Umschaltung mittels eines Tastverhältnisses zwischen zwei Steuerdrücken in einem Taktventil erfolgen, wobei das Tastverhältnis in entsprechender Weise aus einem Sollhub für die Position der Drosselklappe abgeleitet werden kann. Der Sollhub kann dabei von der Motorsteuerung 25 zur Einstellung eines vorgegebenen Luftmassenstroms vorgegeben sein. Bei den beiden Steuerdrücken kann sich ebenfalls unter Ladedruck pl und den Umgebungsdruck pu handeln, sofern ein Abgasturbolader eingesetzt wird.

Statt der Verwendung eines Tastverhältnisses zur Bildung des Ansteuersignals kann ein Verhältnis zwischen den beiden Steuergrößen in Abhängigkeit der Sollposition des Stellers auch ohne Umschaltung eingestellt bzw. vorgegeben werden. Dabei können die beiden Steuergrößen bspw. gewichtet überlagert werden. Im Falle der oben beschriebenen Beispiele führt das zu einer gewichteten Überlagerung der beiden Steuerdrücke, also in diesen Beispielen des Ladedruckes pl und des Umgebungsdruckes pu. Dies kann bspw. dadurch realisiert werden, dass die Zufuhr des Ladedruckes pl über den ersten Eingang 125 und die Zufuhr des Umgebungsdruckes pu über den zweiten Eingang 130 jeweils über eine verstellbare Blende erfolgt, durch deren Öffnungsquerschnitt die jeweilige Gewichtung erfolgt. Dabei kann dem in Abhängigkeit der Sollposition des Stellers ermittelten Differenzdruck pdiff an Stelle des Tastverhältnisses τ der jeweilige Öffnungsquerschnitt für die beiden Blenden zugeordnet sein, der erforderlich ist, um den gewünschten Steuerdruck pst zu erzeugen. Diese Zuordnung kann ebenfalls durch ein geeignetes drittes Kennfeld an Stelle des zweiten Kennfeldes 35 erfolgen, wobei das dritte Kennfeld bspw. auf einem Prüfstand appliziert werden kann. Ändert sich der Differenzdruck pdiff für eine bestimmte Zeit nicht, so bleibt für diese Zeit auch der Öffnungsquerschnitt der beiden Blenden gemäß der Vorgabe des dritten Kennfeldes fest. Bei der beschriebenen gewichteten Überlagerung der beiden Steuergrößen wird somit gegenüber der Verwendung des Tastverhältnisses zur Bildung des Ansteuersignals der Vorteil bewirkt, dass eine genauere Einstellung des Ansteuersignals, gemäß den obigen Beispielen des Steuerdruckes pst, ermöglicht wird, der zudem einen geringeren Verschleiß zur Folge hat wie dies bei der Verwendung des Schalters 75 der Fall ist.

**Patentansprüche**

1. Verfahren zur Ansteuerung eines Stellgliedes (1) für eine Regelung zur Einstellung einer vorgegebenen Regelgröße, wobei, von der Regelung zur Umsetzung der vorgegebenen Regelgröße eine Sollposition für einen Steller (5) des Stellgliedes (1) vorgegeben wird, dass in Abhängigkeit der Sollposition des Stellers (5) ein Ansteuersignal gebildet wird, mit dem das Stellglied (1) zur Einstellung der Sollposition angesteuert wird, **dadurch gekennzeichnet, dass** zur Bildung des Ansteuersignals ein Verhält-nis zwischen zwei Steuergrößen vorgegeben wird und dass das Verhältnis in Abhängigkeit der Sollposition des Stellers (5) vorgegeben wird.

**2.** Verfahren nach Anspruch 1, **dadurch gekennzeichnet, dass** das Verhältnis als Tastverhältnis vorgegeben wird, mit dem zwischen den zwei Steuergrößen umgeschaltet wird.

**3.** Verfahren nach einem der vorherigen Ansprüche, **dadurch gekennzeichnet, dass** aus der vorgegebenen Sollposition über einen physikalischen Zusammenhang eine physikalische Größe zur Umsetzung der Sollposition am Stellglied (1) bestimmt wird.

**4.** Verfahren nach Anspruch 3, **dadurch gekennzeichnet, dass** das Ansteuersignal in Abhängigkeit der physikalischen Größe gebildet wird.

**5.** Verfahren nach Anspruch 4, soweit dieser auf Anspruch 2 rückbezogen ist, **dadurch gekennzeichnet, dass** das Tastverhältnis aus der physikalischen Größe bezogen auf eine Differenz zwischen den beiden Steuergrößen abgeleitet wird.

**6.** Verfahren nach einem der vorherigen Ansprüche, **dadurch gekennzeichnet, dass** als Stellglied (1) eine Wastegateklappe eines Abgasturboladers (10, 15, 20) gewählt wird, bei der der Steller (5) als Ventil ausgebildet ist und die Sollposition durch einen Sollventilhub gebildet wird.

**7.** Verfahren nach Anspruch 6, soweit dieser auf einen der Ansprüche 2 bis 5 rückbezogen ist, **dadurch gekennzeichnet, dass** als eine erste Steuergröße eine Ladedruck und als eine zweite Steuergröße ein Umgebungsdruck gewählt werden.

**8.** Verfahren nach Anspruch 6 oder 7, soweit diese auf einen der Ansprüche 3 bis 5 rückbezogen sind, **dadurch gekennzeichnet, dass** als physikalische Größe ein Differenzdruck gewählt wird, der eingestellt werden muss, um den Sollventilhub umzusetzen.

**9.** Verfahren nach einem der Ansprüche 1 bis 5, **dadurch gekennzeichnet, dass** als Stellglied (1) ein Ladedrucksteller gewählt wird, mit dem eine Geometrie einer Turbine (15) eines Abgasturboladers (10, 15, 20) variabel verstellt wird, und dass die Sollposition durch einen Sollwert für die Turbinengeometrie gebildet wird.

**10.** Verfahren nach Anspruch 1, **dadurch gekennzeichnet, dass** das Verhältnis durch gewichtete Überlagerung der beiden Steuergrößen vorgegeben wird.

**11.** Vorrichtung (25) zur Ansteuerung eines Stellgliedes (1) für eine Regelung zur Einstellung einer vorgegebenen Regelgröße, wobei eine Regelung (30) zur Umsetzung der vorgegebenen Regelgröße eine Sollposition für einen Steller (5) des Stellgliedes (1) vorgibt, dass Ansteuermittel (35) vorgesehen sind, die in Abhängigkeit der Sollposition des Stellers (5) ein Ansteuersignal bilden, mit dem das Stellglied (1) zur Einstellung der Sollposition angesteuert wird, **dadurch gekennzeichnet, dass** Mittel (35, 95, 100) vorgesehen sind, die zur Bildung des Ansteuersignals ein Verhältnis zwischen zwei Steuergrößen in Abhängigkeit der Sollposition des Stellers (5) vorgeben.

**Claims**

**1.** Method for controlling an actuator (1) for a closed-loop control operation for setting a predefined closed-loop control variable, wherein a setpoint position for a final control element (5) of the actuator (1) is predefined by the closed-loop controller for implementing the predefined closed-loop control variable, wherein, as a function of the setpoint position of the final control element (5) a control signal is formed with which the actuator (1) is controlled in order to set the setpoint position, **characterized in that,** in order to form the control signal, a ratio between two open-loop control variables is predefined, and **in that** the ratio is predefined as a function of the setpoint position of the final control element (5).

**2.** Method according to Claim 1, **characterized in that** the ratio is predefined as a pulse-duty factor with which switching over between the two open-loop control variables is performed.

**3.** Method according to one of the preceding claims, **characterized in that** a physical variable for implementing the setpoint position at the actuator (1) is determined from the predefined setpoint position by means of a physical relationship.

**4.** Method according to Claim 3, **characterized in that** the control signal is formed as a function of the physical variable.

**5.** Method according to Claim 4, insofar as the latter is referred back to Claim 2, **characterized in that** the pulse-duty factor is derived from the physical variable related to a difference between the two open-loop control variables.

**6.** Method according to one of the preceding claims, **characterized in that** a wastegate valve of an exhaust gas turbocharger (10, 15, 20), in which wastegate valve the final control element (5) is embodied as a valve and the setpoint position is formed by a setpoint valve stroke, is selected as the actuator (1).

**7.** Method according to Claim 6, insofar as the latter is referred back to one of Claims 2 to 5, **characterized in that** a charge pressure is selected as a first open-loop control variable, and an ambient pressure is selected as a second open-loop control variable.

**8.** Method according to Claim 6 or 7, insofar as the latter are referred back to one of Claims 3 to 5, **characterized in that** a differential pressure, which has to be set in order to implement the setpoint valve stroke, is selected as a physical variable.

**9.** Method according to one of Claims 1 to 5, **characterized in that** a charge pressure final control element, with which a geometry of a turbine (15) of an exhaust gas turbocharger (10, 15, 20) is adjusted in a variable fashion, is selected as the actuator (1), and **in that** the setpoint position is formed by a setpoint value for the turbine geometry.

**10.** Method according to Claim 1, **characterized in that** the ratio is predefined by weighted superimposition of both open-loop control variables.

**11.** Apparatus (25) for controlling an actuator (1) for a closed-loop control operation for setting a predefined closed-loop control variable, wherein a closed-loop controller (30) for implementing the predefined closed-loop control variable predefines a setpoint position for a final control element (5) of the actuator (1), wherein control means (35) are provided which form, as a function of the setpoint position of the final control element (5), a control signal with which the actuator (1) is controlled in order to set the setpoint position, **characterized in that** means (35, 95, 100) are provided which, in order to form the control signal, predefine a ratio between two open-loop control variables as a function of the setpoint position of the final control element (5).

**Revendications**

**1.** Procédé de commande d'un organe de réglage (1) dans une régulation d'établissement d'une grandeur prédéterminée de régulation, dans lequel
une position de consigne d'un actionneur (5) de l'organe de réglage (1) est prédéterminée par la régulation en vue de convertir la grandeur de régulation prédéterminée,
un signal de commande étant formé en fonction de la position de consigne de l'actionneur (5) et commandant l'organe de réglage (1) pour qu'il établisse la position de consigne,
**caractérisé en ce que**
pour former le signal de commande, le rapport entre deux grandeurs de commande est prédéterminé et
**en ce que** le rapport est prédéterminé en fonction de la position de consigne de l'actionneur (5).

**2.** Procédé selon la revendication 1, **caractérisé en ce que** le rapport est prédéterminé comme taux d'échantillonnage par lequel on bascule entre les deux grandeurs de commande.

**3.** Procédé selon l'une des revendications précédentes, **caractérisé en ce qu'**une grandeur physique de conversion de la position de consigne est déterminée sur l'organe de réglage (1) à partir de la position de consigne prédéterminée et par l'intermédiaire d'une relation physique.

**4.** Procédé selon la revendication 3, **caractérisé en ce que** le signal de commande est formé en fonction de la grandeur physique.

**5.** Procédé selon la revendication 4 dans la mesure où celle-ci dépend de la revendication 2, et **caractérisé en ce que** le taux d'échantillonnage est obtenu à partir de la grandeur physique, en référence à une différence entre les deux grandeurs de commande.

**6.** Procédé selon l'une des revendications précédentes, **caractérisé en ce que** comme organe de réglage (1), il présente un clapet de passage d'échappement d'un turbocompresseur (10, 15, 20) entraîné par les gaz d'échappement, l'actionneur (5) étant configuré comme soupape et la position de consigne étant formée par une course de consigne de la soupape.

**7.** Procédé selon la revendication 6 dans la mesure où celle-ci dépend de l'une des revendications 2 à 5, **caractérisé en ce que** la pression de suralimentation qui est sélectionnée comme première grandeur de commande et la pression ambiante est sélectionnée comme deuxième grandeur de commande.

**8.** Procédé selon les revendications 6 ou 7 dans la mesure où celles-ci dépendent de l'une des revendications 3 à 5, **caractérisé en ce que** comme grandeur physique, il sélectionne la différence de pression qui doit être établie pour convertir la course de consigne de la soupape.

**9.** Procédé selon l'une des revendications 1 à 5, **caractérisé en ce qu'**il utilise comme organe de réglage (1) un dispositif de réglage de la pression de suralimentation par lequel la géométrie de la turbine (15) du turbocompresseur (10, 15, 20) entraîné par les gaz d'échappement peut être modifiée, et **en ce que** la position de consigne est formée par la valeur de consigne de la géométrie de la turbine.

**10.** Procédé selon la revendication 1, **caractérisé en ce que** le rapport est prédéterminé par une superposition pondérée des deux grandeurs de commande.

**11.** Dispositif (25) de commande d'un organe de réglage (1) en vue d'une régulation d'établissement d'une grandeur de régulation prédéterminée,
une régulation (30) qui convertit la grandeur de régulation prédéterminée prédéterminant une position de consigne d'un actionneur (5) de l'organe de réglage (1),
des moyens de commande (35) formant en fonction de la position de consigne de l'actionneur (5) un signal de commande qui commande l'organe de réglage (1) pour qu'il établisse la position de consigne,
**caractérisé en ce que**
il présente des moyens (35, 95, 100) qui, pour former le signal de commande, prédéterminent un rapport entre deux grandeurs de commande en fonction de la position de consigne de l'actionneur (5).

Fig.1

EP 1 464 807 B1

# Fig.2

## Fig.3

## Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5680763 A
- EP 0742358 A1